# EUROPEAN PATENT APPLICATION

(11) **EP 3 147 786 A1**
(43) Date of publication of application: **29.03.2017**
(21) Application number: 15186459.2
(22) Date of filing: 23.09.2015
(51) Int. Cl.: G06F 9/50

(54) **ALLOCATING RESOURCES FOR A NUMBER OF APPLICATIONS**

(71) Applicant: Siemens Aktiengesellschaft, 80333 München (DE)
(72) Inventor: Neundorfer, Maximilian, 96049 Bamberg (DE); Schönberger, Andreas, 96049 Bamberg (DE)

(57) **Abstract**

The present invention provides a method for automatically allocating a number of resources in a computer system for a number of applications by simulating a run of each of the applications independently, identifying a basic resource utilization of each of the resources for every application based on the simulated run, calculating resource limitation steps for each of the resources for every application, and determining the minimum resources for every application with which the respective application runs within predetermined performance levels based on the limitation steps. Further the present invention provides a corresponding apparatus.

## Description

### TECHNICAL FIELD

The invention relates to a method and to an apparatus for automatically allocating resources in a computer system for a number of applications.

### BACKGROUND

Although explained mostly in connection with embedded systems in this disclosure, the present invention is not limited to embedded systems and can be used with any computer system.

In modern electronics it is a common scenario that multiple applications are deployed on the same physical hardware. By that, a problem that arises is that those applications can interfere with each other in terms of the fulfilment of their performance goals.

A solution to this problem is the allocation of resources to specific applications, to make sure an application has all required resources available. As a technical enabler for such resource limitation the technical means of resource allocation and resource prioritization can be leveraged. Such means are e.g. available, among other, in the Linux kernel feature control groups.

However, the resource requirements of applications have to be known to be able to benefit from the ability to allocate and prioritize resources. Up to now, the allocation of resources matches the requirements only roughly because the utilization behaviour is not known exactly and load testing is not taking resource limitations as a first-class input parameter. In areas like embedded systems where resources are scarce and cannot be easily increased, systematic knowledge of the resource requirements and behaviour of applications under resource limitations is required to guarantee an optimum exploitation of the available resources.

The consequence of not having such systematic knowledge at hand, is either the waste of resources because resources have to be over-provisioned to be "on the safe side", or failure to meet performance goals because resource provisioning is insufficient.

In the area of safety-critical systems, a common approach to address this problem is the provisioning of dedicated hardware for each application. This, however, ends up in installation space issues as well as in cost issues because installation space and budget for building safety-critical systems are limited. In addition, resources that have been provisioned may remain unused, because the one application running on the hardware does not require all resources.

Accordingly, there is a need for improved resource allocation to applications in computer systems.

### SUMMARY

Therefore, the present invention provides a method with the features of independent claim 1 and an apparatus with the features of independent claim 11.

Accordingly, a method for automatically allocating a number, one or more, of resources in a computer system for a number, one or more, of applications comprises simulating a run of each of the applications independently, identifying a basic resource utilization of each of the resources for every application based on the simulated run, calculating resource limitation steps for each of the resources for every application, and determining the minimum resources for every application with which the respective application runs within predetermined performance levels based on the resource limitation steps.

Furthermore, an apparatus for automatically allocating a number, one or more, of resources in a computer system for a number, one or more, of applications comprises an initializer configured to simulate a run of each of the applications independently and identify a basic resource utilization of each of the resources for every application based on the simulated run, a limitation step calculator configured to calculate resource limitation steps for each of the resources for every application, and a resource determiner configured to determine the minimum resources for every application with which the respective application runs within predetermined performance levels based on the resource limitation steps.

Regarding the present invention a resource can be every type of resource that can be provided to an application by a computer system. Such resources can e.g. be processing power or processing time, an amount of working memory or hard disk memory, the data transfer rate to and from a hard disk or a network, or the like.

An application can be every type of software or code that is executed by a computer system or the operating system of said computer system. The operating system itself can be an application in the context of the present patent application. It is not necessary that the applications are executed within or by an operating system. The applications can also run directly on the hardware of the computer system without using an operating system.

The term basic resource utilization refers to the amount of the respective resource consumed by the respective application if the respective application is the only application executed in said computer system. For example an application can have a basic resource utilization of the processor of 40%, a basic resource utilization of the RAM-memory of 200MB and a basic resource utilization of the disk transfer rate of 5MB/s. The unit of the resource utilization is in each case adapted to the respective resource and can be an absolute value or a relative percentage.

Each resource limitation step defines a specific amount of said resource, wherein every resource limitation step is separated by a predetermined amount from the previous and next resource limitation step. Possible resource limitation steps for the processor utilization can e.g. be 50%, 40%, 30% and 20%.

The term minimum resources refers to a configuration where the application is run with the minimum of each resource, wherein the minimum is chosen from the resource limitation steps. The minimum resources have to be chosen such that the application performs within predetermined performance levels. The performance levels refer to specific requirements the application has to fulfil. An example of a predetermined performance level can e.g. be a maximum reaction time for the application. In a real time system it might e.g. be necessary to receive the applications output within 2ms or the like after an input is provided to the application. Another predetermined performance level can be the time needed by the application code to run from one instruction to another instruction or the like.

If in the present invention the term "simulating" is used in conjunction with an application and the identifying of the basic resource utilization, "simulating" means running the application either on a real hardware and measuring e.g. with a debugger the relevant data or emulating the hardware with an emulator and running the application on the emulated hardware. A debugger can e.g. automatically generate time stamps for given triggers in the application. For example a time stamp can be generated when a specific instruction in the code of the application is reached.

In a complex computer system, e.g. an automotive control unit like an AUTOSAR compatible control unit, a plurality of applications can be installed. If the resources allocated to each application are not optimized correctly the control unit can be oversized and thus, resources can be left unused in the control unit. On the other hand too many applications could be installed in the control unit for all applications to perform as expected.

The present invention avoids this and performs an automated optimization of the resources allocated to each of the applications running on a computer system. To achieve an optimum resource allocation every application is iteratively optimized with reference to the respective resource consumption or allocation. Iteratively means that an application is tested with a number of amounts for each resource and the performance of the application is tested for the different amounts of each resource.

A result of the optimization can e.g. be that enough resources are freed in the electronic control unit such that another application can be installed in the control unit. Such an application can then be removed from another control unit which may eventually be removed from the system completely. Therefore, the resource utilization in the system can be optimized.

Another result of the optimization can be that there are enough free resources in the computer system after optimizing the resource allocation to the applications to reduce the processor performance or the amount of memory provided in the computer system, thereby reducing the complexity and the power consumption of the computer system.

Summing up, the fully automated process of the present invention avoids a waste of resources in a computer system. Furthermore, violations of performance goals for the single applications can also be avoided.

Further embodiments of the present invention are subject of the further subclaims, wherein where not explicitly stated otherwise features of single embodiments can be combined together to form further embodiments and the subclaims of one claim category can be adapted to other claim categories.

In a possible embodiment determining resource limitation steps comprises for each resource calculating the number of resource limitation steps by dividing the availability of a resource by the applications share of said resource during the simulated run. The number of resource limitation steps can be limited by a maximum number, e.g. 5 to 20, 10 or the like, and/or a minimum number of limitation steps, like 2 or 3. The availability of a resource is a measure of the available amount of the respective resource. Available processor time or processing power can e.g. be defined as a percentage. A two core processor can e.g. comprise 200% of processing power. The applications share refers to the relative amount of said resource consumed by the respective application during the simulated run. An application can e.g. consume 40% of the 200% of processing power, also called utilization. The share of the application of the processing power is in this case 20%.

Determining resource limitation steps further comprises, selecting the minimum of either the applications utilization of the respective resource during the simulated run or the difference of the availability and the utilization as a base value, wherein the base value will serve as a starting point to determine the amount of the respective resource in the single limitation steps. The base value is reduced by a threshold percentage, like e.g. 5% to 20% or 10%, of said base value and divided by the number of resource limitation steps to calculate the step width. The reduction prevents testing 0% and 100% values of the resource. Finally the single resource limitation steps are provided e.g. as a resource vector, wherein the base value is the middle value of said vector and the difference between to neighbouring steps is defined by the calculated step width.

In a possible embodiment determining the minimum resources comprises prioritizing the resources and successively limiting the resources starting with the resource of the highest priority, determining for every resource limitation step, if the respective application runs within the predetermined performance level, and selecting for the respective resource as a viable minimum resource value for the respective application the resource value of the last limitation step, if the respective application does not run within the predetermined performance level with the actual resource limitation step. In a possible embodiment the priorities of the resources are defined based on the importance of the respective resources to the respective application, or the priorities of the resources are defined based on the applications share of the respective resource.

In a possible embodiment the viable minimum resource value is determined for all resources but the resource with the lowest priority, and a resource cost function for every application is provided which provides a performance value for the respective application and the resource with the lowest priority is a parameter of the resource cost function. This approach provides a resource cost function where all resources but the resource with the lowest priority have a fixed value. This approach is less complex to compute but only provides one optimum solution. The resource cost function in this embodiment can e.g. be a one dimensional array or vector and the parameter can be the index of the array or the vector. It is to be understood that the minimum of said parameter can be determined in one embodiment for which the application performs within the predetermined performance level.

In a possible embodiment determining the minimum resources comprises determining for every permutation of amounts of resources based on the resource limitation steps, if for the respective permutation the respective application runs within the predetermined performance level. In a possible embodiment a resource cost function is defined which provides a performance value for the respective application and wherein all resources utilized by the application are parameters of the resource cost function. With this approach the resource cost function can be provided as a multidimensional array or vector, wherein the performance characteristics of the application for every permutation of the resources are stored in the array or vector. The array or vector can e.g. comprise the reaction time or latency of the respective application with the given combination of resources. Selecting the optimum solutions can be performed by defining a threshold value or by simply selecting a given number of the entries with the best performance metrics, like e.g. the lowest latency.

In a possible embodiment resources for which the application's share or the applications utilization is below a predefined threshold are excluded from the computations. This allows reducing the complexity of the necessary computations.

In a possible embodiment the method further comprises optimizing for a combination of all applications in a computer system an optimal resource allocation based on the determined minimum resource amounts. The optimization can be based e.g. on a mathematical optimization using the resource cost functions and an optimization goal like maximizing the number of applications running on the computer system. Another optimization goal can e.g. be to minimize the reaction time of a given number of applications in a computer system with a given hardware.

In a possible embodiment the method further comprises automatically allocating for every application and for every resource the determined minimum resource amount in a computer system. This can be done in various ways. In one example configuration data can be generated, which can e.g. be interpreted by an operating system of said computer system. The operating system then extracts from the configuration data the information about the resources which should be allocated to each application and executes the applications with the respective resources.

In a possible embodiment the method further comprises automatically generating a software image for a computer system comprising an operating system and the applications, wherein the operating system is automatically configured to allocate for every application and for every resource the respective amount of the resource in the computer system. The software image can e.g. be an image, which is downloaded to the computer system, e.g. an embedded system. Such an image can comprise the operating system as well as the application which should be run by the operating system.

In case the operating system comprises a static scheduler, generating the image can also comprise configuring the static scheduler to run the single applications with the resources identified in the optimization process.

In one embodiment the resources for a computer system yet to be produced are automatically chosen based on a list of applications to run on the computer system and the minimum resources determined for each of the applications with the method according to the present invention. The method or the apparatus of the present invention can e.g. be integrated in an electrical engineering or development tool in which the respective applications can be defined. The tool will then automatically choose and suggest to the engineer the appropriate hardware to run the defined applications.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a flow diagram of an embodiment of a method according to the present invention,
- Fig. 2: shows a block diagram of an embodiment of an apparatus according to the present invention,
- Fig. 3: shows a flow diagram of another embodiment of a method according to the present invention,
- Fig. 4: shows a block diagram of another embodiment of an apparatus according to the present invention,
- Fig. 5: shows a diagram resulting from a resource cost function according to the present invention, and
- Fig. 6: shows a diagram resulting from another resource cost function according to the present invention.

In the figures like reference signs denote like elements unless stated otherwise.

### DETAILED DESCRIPTION OF THE DRAWINGS

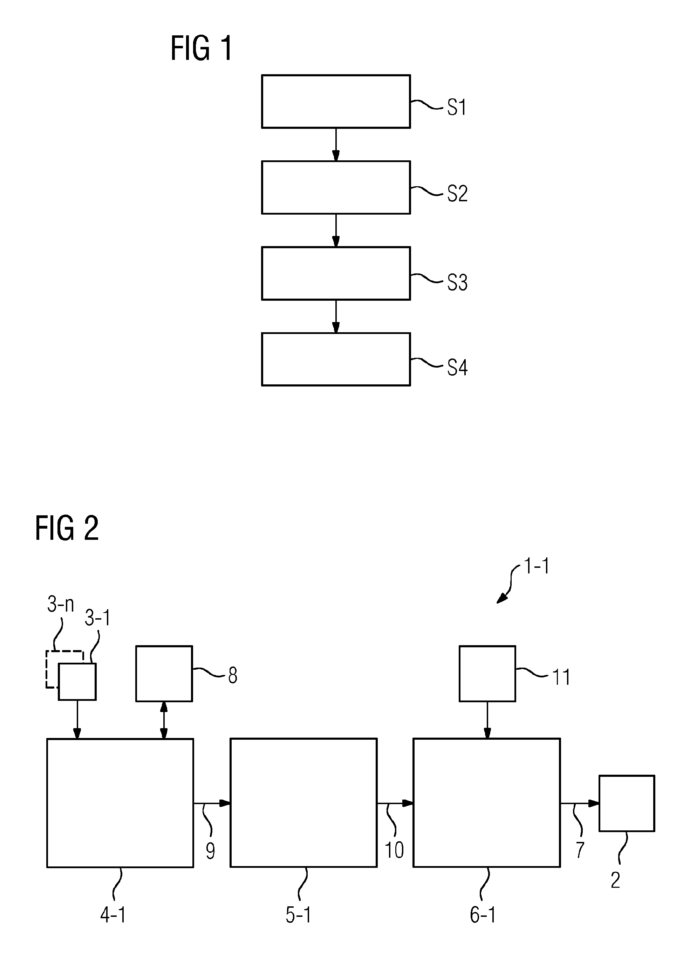

Fig. 1 shows a flow diagram of an embodiment of a method according to the present invention for automatically allocating a number of resources in a computer system 2 for a number of applications 3-1 - 3-n.

In order to establish a basis for optimizing and allocating the resources for the single application 3-1 - 3-n each application 3-1 - 3-n is in a first step S1 simulated independently. Simulating the single applications 3-1 - 3-n can e.g. comprise running the applications 3-1 - 3-n on a target hardware coupled with a debugger such that the execution of the application 3-1 - 3-n can be monitored step by step. Alternatively the applications 3-1 - 3-n can be executed within an emulated, a.k.a. virtual, hardware. In such a case the emulation software can e.g. provide means for monitoring the execution of the respective application 3-1 - 3-n.

Based on the simulation a basic resource utilization 9 of each of the resources for every application 3-1 - 3-n is identified based on the simulated run, S2. The basic resource utilization 9 is the amount of a respective resource utilized by the application 3-1 - 3-n during the simulated run. To derive the basic resource utilization 9 during the test run no further applications 3-1 - 3-n are executed within the simulation environment. The applications 3-1 - 3-n resource consumption will therefore settle at a level at which the application 3-1 - 3-n is guaranteed to meet predetermined performance levels 11. It is still possible that the application can meet the predetermined performance levels 11 with other resource configurations than determined by the basic resource utilization 9. In a fictional and merely exemplary situation an application 3-1 - 3-n could have a basic resource utilization 9 of 20% CPU, 250MB of memory and 4MB/s of disk data rate. The same application 3-1 - 3-n could meet the predetermined performance levels 11 using 30% of the CPU, 200MB of memory and 3MB/s disk data rate, and also with 15% CPU, 300MB of memory and 5MB/s disk data rate.

To analyse the resource configurations with which the application 3-1 - 3-n meets the predetermined performance levels 11 resource limitation steps 10 for each of the resources for every application 3-1 - 3-n are calculated S3 based on the knowledge of the basic resource utilization 9.

With the resource limitation steps 10 in step S4 the minimum resources for every application 3-1 - 3-n with which the respective application 3-1 - 3-n runs within predetermined performance levels 11 is determined based on the limitation steps 10.

In an embodiment of the method the step of calculating S3 resource limitation steps 10 comprises for each resource calculating the number of resource limitation steps 10 by dividing the availability of a resource by the applications share of said resource during the simulated run. The number of resource limitation steps 10 can be limited by a maximum number and/or a minimum number of limitation steps 10.

Furthermore, the minimum of either the applications 3-1 - 3-n utilization of the respective resource during the simulated run or the difference of the availability and the utilization is selected as a base value. The base value is then reduced by a threshold percentage, like e.g. ten percent, of said base value and divided by the number of resource limitation steps 10 to calculate the step width.

The single resource limitation steps 10 can then be provided for every resource as a resource vector, array, list or the like comprising for the respective resource the test steps. The base value is the middle value of said vector and the difference between two neighbouring steps is defined by the calculated step width.

In the following two examples will be given for the calculation of the resource limitation steps 10.

The Number of tests is limited by a maximum of 10 and a minimum of 2. The actual number is calculated for an application by the formula Resource Availability/Share = Number of tests.

The Minimum of (Availability-Utilization) and Utilization is selected and reduced in this example by 10% to avoid testing 100% or 0%.

The resulting value is divided by the number of test steps from step 1 to determine the step width.

In a first example the resource limitation steps 10 for CPU resource will be calculated with the following starting values:
200 Availability(%), 40 Utilization(%), 20 Share(%).

The number of tests is 200%/20%=10. The minimum of (Availability-Utilization) and Utilization is Min(200%-40%;40%)=40% (CPU-Share). The CPU-Share is reduced by 10%: 40%-4=36% (CPU-Share). Finally the reduced CPU-Share value is divided by the number of steps: 36%/10=3,6%, resulting in a test step delta in point percent CPU-Share.

The resulting test steps are:
22%; 25,6%; 29,2%; 32,8%; 36,4%; 40%; 43,6%; 47,2%; 50,8%; 54,4%.

In a second example the resource limitation steps 10 will be calculated for memory consumption with the following starting values:
1000 Availability in MB, 70 Utilization in MB, 7 Share(%).

The number of tests is 1000/70= 14, the maximum limit of 10 will be effective. The minimum of (Availability-Utilization) and Utilization is Min(1000-70;70)=70 (MB memory). The memory is reduced by 10%: 70-7=63 (MB memory). Finally the reduced CPU-Share value is divided by the number of steps: 63/10=6,3, resulting in a test step delta in MB.

The resulting test steps are:
38,5MB; 44,8MB; 51,1MB; 57,4MB; 63,7MB; 70MB; 76,3MB; 82,6MB; 88,9MB; 95,2MB.

Fig. 2 shows a block diagram of an embodiment of an apparatus 1-1 according to the present invention.

The apparatus 1-1 comprises an initializer 4-1, which simulates a run of each one of the applications 3-1 - 3-n with a debugger 8, which is attached to the target hardware on which the applications 3-1 - 3-n will be installed. In other embodiments the initializer 4-1 can use an emulator of the target hardware to execute the run. The test runs for the single applications 3-1 - 3-n are performed independently of each other. This means that the execution of one application doesn't influence the execution of the other applications. During these runs of the applications 3-1 - 3-n the initializer identifies the basic resource utilization 9 of each application 3-1 - 3-n for each resource. In other words the initializer identifies the initial resource values for the calculation of the minimum resources for the applications 3-1 - 3-n.

Based on the basic resource utilization 9 of each application 3-1 - 3-n a limitation step calculator 5-1 calculates for every resource the single resource limitation steps 10. The limitation step calculator 5-1 can e.g. execute a method as described in conjunction with Fig. 1.

A resource determiner 6-1 determines the minimum resources for every application 3-1 - 3-n with which the respective application 3-1 - 3-n runs within predetermined performance levels 11 based on the resource limitation steps 10. Determining the minimum resources 7 in this context can e.g. comprise determining a resource cost function as explained above. Such a resource cost function can have one or more resources as input parameters and the output for a respective combination of resources comprises the performance level of the respective application 3-1 - 3-n. Such a resource cost function therefore provides a performance level for a number of possible resource configurations even if with one of the resource configurations the application 3-1 - 3-n performs below the predetermined performance levels 11.

In Fig. 2 the determined minimum resources 7 are provided to the computer system 2, where e.g. an operating system can be configured to execute the single applications 3-1 - 3-n according to the minimum resources 7.

The computer system 2 can e.g. be a single embedded system, for example a control unit in a vehicle like a train, a car or an aircraft.

In case that the computer system 2 is an embedded system the resource determiner 6-1 or an additional component of the apparatus 1-1 can e.g. configure and compile a software image for said embedded system which includes all relevant applications 3-1 - 3-n and at least a scheduler which schedules the applications and assigns resources to the applications as defined by the minimum resources 7. The scheduler can also be part of a full featured operating system.

On the other hand the computer system 2 can also be a traditional computer or a virtual or distributed computer system like a so called "cloud system" where applications 3-1 - 3-n can be executed in a virtual or a distributed fashion and resources can explicitly be assigned to the single applications 3-1 - 3-n. In such an embodiment the minimum resources 7 can be provided to the virtual computer system or the cloud system via a configuration interface, wherein the virtual computer system or the cloud system then executes the applications 3-1 - 3-n according to the minimum resources 7.

In a virtual computer system or a cloud system it is also possible to provide different configurations of minimum resources 7 based on different load profiles. One of the applications can e.g. be a website which is frequented by a big number of users during the day and only by some users during the night. In such cases different predetermined performance levels 11 can be defined for daytime and night time and different sets of minimum resources 7 can be provided for daytime and night time. Daytime and night time in this case are only examples. It is to be understood that other time ranges or load cases can be specified, like e.g. working hours, weekends, etc.

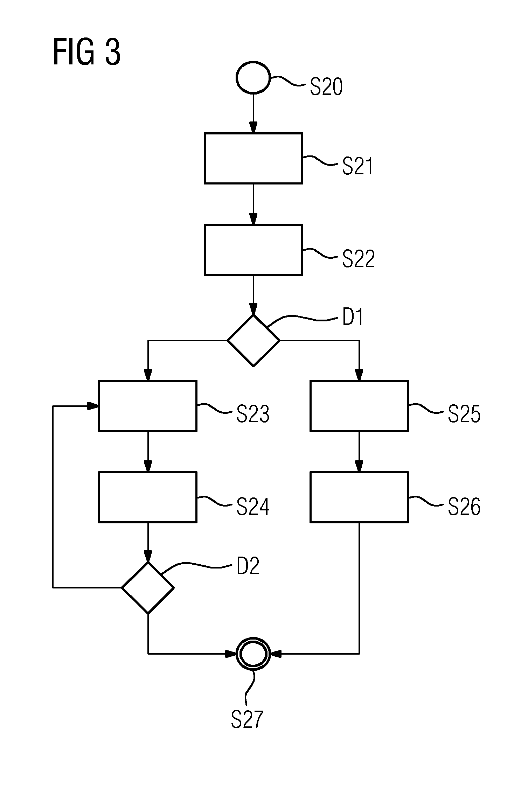

Fig. 3 shows a flow diagram of another embodiment of a method according to the present invention.

The method in Fig. 3 starts at S20. In S21 the basic resource utilization 9 is identified e.g. by an initializer 4-1 as shown in Fig. 2. In S22 it is decided which resources should be evaluated. For example resources which are not used by an application 3-1 - 3-n or used only to a certain extent which is below a threshold value could be ignored for the rest of the procedure to reduce the work load.

If an application 3-1 - 3-n for example has a processor utilization of 30% and a memory utilization of 300MB and a network load of near 0, the network load could be excluded from further processing for being irrelevant.

In decision block D1 it is to be decided, which type of analysis should be performed. The present invention provides two different ways of determining the minimum resources 7 for an application 3-1 - 3-n or providing a respective resource cost function.

The first variant sequentially limits the resources and leaves only one resource as a parameter to the resource cost function. The other variant provides a multi-dimensional resource cost function which has a parameter for every resource. Because the second variant has to analyse all possible permutations of resources for every single application the second variant requires more processing power than the first variant but also provides the more detailed analysis.

If it is decided in D1 that the first variant should be performed in S23 a first resource is gradually limited until the respective application 3-1 - 3-n doesn't perform within the predetermined performance level 11 no more. The minimum resource 7 with which the respective application 3-1 -3-n still runs within the predetermined performance level 11 is then memorized and in D2 a jump back to S23 is performed. This loop is executed until all but the last resource have been limited. The last resource is then provided as a parameter to the resource cost function. The method then ends in S27. The order in which the resources are limited can e.g. be chosen based on a priority or a share of the resources of the respective application 3-1 - 3-n. In one embodiment for the last resource the limitation steps 10 can also be computed for the last resource and the performance can be evaluated for these steps. The resource cost function can then e.g. be provided as a set of performance values.

If in D1 the second variant is chosen, all permutations of resource limitation steps, which are previously defined in S25, are used to generate the resource cost function in S26. In this case the resource cost function has a parameter for every one of the resources. The resource cost function therefore maps a combination of resources to a performance value for the respective application 3-1 - 3-n. To provide this mapping a simulation of the respective application can be performed for every single permutation of resource values.

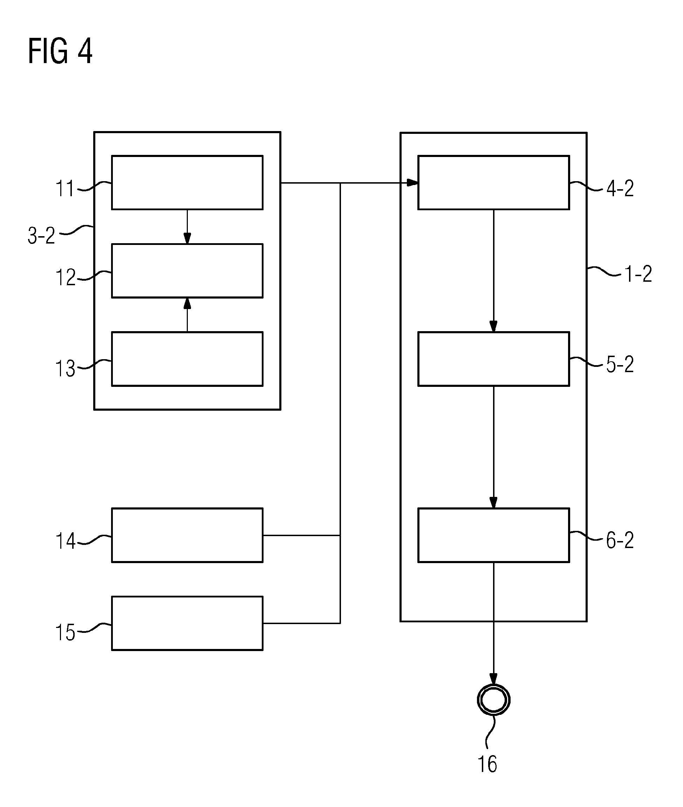

Fig. 4 shows a block diagram of another embodiment of an apparatus 1-2 according to the present invention.

The apparatus 1-2 combines specific information in the application 3-2. For example predetermined performance levels 11 are provided to a test script 12 which also is provided with load data 13. The load data 13 can e.g. comprise load profiles for different times of the day or different days of the week or the like. The load data can e.g. also comprise load profiles for an automotive control unit or the like. E.g. one load profile could be based on a normal straight driving and a second load profile could be based on an active ESP control situation or the like.

This information is passed together with the application 3-1 to the apparatus 1-2 where the initializer 4-2 performs the initial test run of the application 3-2 and e.g. provides a resource consumption graph which represents the basic resource utilization 9 during the test run. At the same time the initializer 4-2 can also define the priorities of the resources based on the basic resource utilization 9 and the share of the application 3-2 of every resource.

The initializer 4-2 provides this information to the limitation step calculator 5-2 which calculates for every resource the resource limitation steps 10. The resource limitation steps 10 are provided together with the predetermined performance levels 11 and the resource priorities to the resource determiner 6-2 which calculates the respective resource cost function 16. As already explained above the resource cost function 16 can e.g. be a one-dimensional or multi-dimensional function. In one embodiment the resource cost function 16 can e.g. be a one-dimensional or multi-dimensional array or vector.

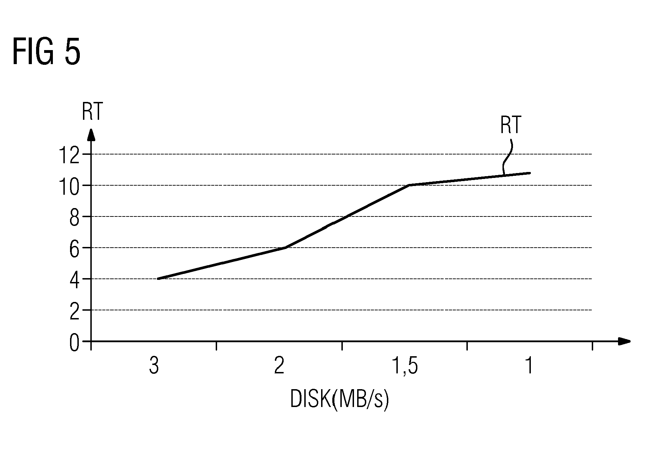

Fig. 5 shows a diagram resulting from a one dimensional resource cost function according to the present invention.

In the diagram it can be seen that the input parameter of the resource cost function is the disk transfer rate in MB/s. The resource cost function is further based on the CPU load and the memory consumption. As explained above for a one-dimensional resource cost function all but the parameter with the least priority are fixed.

In the present example of Fig. 5 the value for the CPU consumption has been fixed to 30% and the value for the memory consumption has been fixed to 75MB.

The resource cost function therefore delivers for different values of the disk transfer rate the reaction time RT of the respective application.

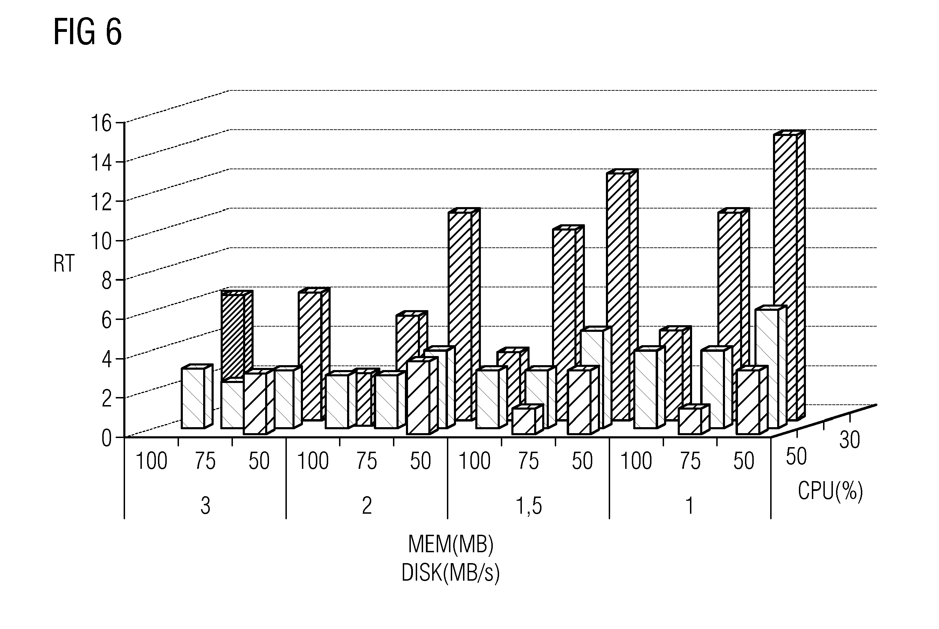

Fig. 6 shows a diagram resulting from a multi-dimensional resource cost function according to the present invention.

In the diagram the input parameters are the CPU load in %, the memory consumption in MB, and the disk transfer rate in MB/s. The reaction time is the result of the resource cost function. In order to show all possible combinations of the resources in a 3D plot the diagram shows a bar graph. The bar graph has various sections defined by the disk transfer rate for 3 MB/s, 2MB/s, 1,5MB/s and 1MB/s. In every section bars are shown for memory consumption of 100MB, 75MB and 50MB and for 50% CPU and 30% CPU.

It becomes clear that the multi-dimensional resource cost function allows a much more detailed analysis of the behaviour of an application 3-1 - 3-n under different resource configurations. Where the one-dimensional resource cost function only shows one configuration with the minimum reaction time, in the multi-dimensional resource cost function different minima can be identified by simply selecting the minimum values from the results.

When including multiple applications 3-1 - 3-n in a computer system the resource cost functions can e.g. be provided to an optimization engine which optimizes the execution of the applications 3-1 - 3-n in the respective computer system. The optimization goal can e.g. be to maximize the reaction time of the single applications or to include as many applications in the computer system as possible or the like. The optimization goal can also be more complex and have different sub goals for the different applications 3-1 - 3-n. For example for one application the goal could be defined as minimizing the reaction time and for other applications the goal could be defined as minimizing resource consumption of one or all resources.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The elements and modules described in conjunction with the present invention can e.g. be embodied as hardware, software or a combination of both. For example elements of the present invention can be partially embodied as executable or interpreted code or even as source code.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

## Claims

1. Method for automatically allocating a number of resources in a computer system (2) for a number of applications (3-1 - 3-n), comprising:
simulating (S1) a run of each of the applications (3-1 - 3-n) independently,
identifying (S2) a basic resource utilization (9) of each of the resources for every application (3-1 - 3-n) based on the simulated run,
calculating (S3) resource limitation steps (10) for each of the resources for every application (3-1 - 3-n), and
determining (S4) the minimum resources (7) for every application (3-1 - 3-n) with which the respective application (3-1 - 3-n) runs within predetermined performance levels (11) based on the resource limitation steps.

2. Method according to claim 1, wherein calculating (S3) resource limitation steps (10) comprises for each resource:
calculating the number of resource limitation steps (10) by dividing the availability of a resource by the applications share of said resource during the simulated run,
selecting the minimum of either the applications utilization of the respective resource during the simulated run or the difference of the availability and the utilization as a base value,
reducing the base value by a threshold percentage of said base value,
dividing the base value by the number of resource limitation steps (10) to calculate the step width, and
providing a resource vector comprising for the respective resource the test steps, wherein the base value is the middle value of said vector and the difference between two neighbouring steps is defined by the calculated step width,
wherein the availability of a resource is a measure of the available amount of the respective resource, and the applications (3-1 - 3-n) share refers to the relative amount of said resource consumed by the respective application (3-1 - 3-n) during the simulated run, and the applications (3-1 - 3-n) utilization refers to the total amount of said resource consumed by the respective application (3-1 - 3-n) during the simulated run.

3. Method according to claim 2, wherein when calculating (S3) the number of resource limitation steps (10) the number of resource limitation steps (10) is limited by a maximum number and/or a minimum number of limitation steps.

4. Method according to any one of the previous claims, wherein determining (S4) the minimum resources (7) comprises:
prioritizing the resources and successively limiting the resources starting with the resource of the highest priority, determining for every resource limitation step (10), if the respective application (3-1 - 3-n) runs within the predetermined performance level (11), and
selecting for the respective resource as a viable minimum resource value for the respective application (3-1 - 3-n) the resource value of the last limitation step, if the respective application (3-1 - 3-n) does not run within the predetermined performance level (11) with the actual resource limitation step (10).

5. Method according to claim 4, wherein the viable minimum resource value is determined for all resources but the resource with the lowest priority, and wherein a resource cost function for every application (3-1 - 3-n) is provided which provides a performance value for the respective application (3-1 - 3-n) and wherein the resource with the lowest priority is a parameter of the resource cost function.

6. Method according to any one of claims 4 and 5, wherein the priorities of the resources are defined based on the importance of the respective resources to the respective application (3-1 - 3-n), or wherein the priorities of the resources are defined based on the applications share of the respective resource.

7. Method according to any one of the previous claims 1 to 3, wherein determining (S4) the minimum resources (7) comprises:
determining for every permutation of amounts of resources based on the resource limitation steps (10), if for the respective permutation the respective application (3-1 - 3-n) runs within the predetermined performance level (11).

8. Method according to claim 7, wherein a resource cost function is defined which provides a performance value for the respective application (3-1 - 3-n) and wherein all resources utilized by the application (3-1 - 3-n) are parameters of the resource cost function.

9. Method according to any one of claims 2 to 7, wherein resources for which the applications (3-1 - 3-n) share or the applications (3-1 - 3-n) utilization is below a predefined threshold are excluded from the computations.

10. Method according to any one of the preceding claims, further comprising:
optimizing for a combination of all applications (3-1 - 3-n) in a computer system (2) an optimal resource allocation based on the determined minimum resource amounts, and/or
automatically allocating for every application (3-1 - 3-n) and for every resource the determined minimum resource amount in a computer system (2), and/or
automatically generating a software image for a computer system (2) comprising an operating system and the applications (3-1 - 3-n), wherein the operating system is automatically configured to allocate for every application (3-1 - 3-n) and for every resource the respective amount of the resource in the computer system (2).

11. Apparatus (1-1, 1-2) for automatically allocating a number of resources in a computer system (2) for a number of applications (3-1 - 3-n), comprising:
an initializer (4-1, 4-2) configured to simulate a run of each of the applications (3-1 - 3-n) independently and identify a basic resource utilization (9) of each of the resources for every application (3-1 - 3-n) based on the simulated run,
a limitation step calculator (5-1, 5-2) configured to calculate resource limitation steps (10) for each of the resources for every application (3-1 - 3-n), and
a resource determiner (6-1, 6-2) configured to determine the minimum resources (7) for every application (3-1 - 3-n) with which the respective application (3-1 - 3-n) runs within predetermined performance levels (11) based on the resource limitation steps (10).

12. Apparatus (1-1, 1-2) according to claim 11, wherein the limitation step calculator (5-1, 5-2) is configured for each resource to:
calculate the number of resource limitation steps (10) by dividing the availability of a resource by the applications share of said resource during the simulated run, especially wherein the number of resource limitation steps (10) is limited by a maximum number and/or a minimum number of limitation steps,
select the minimum of either the applications utilization of the respective resource during the simulated run or the difference of the availability and the utilization as a base value,
reduce the base value by a threshold percentage of said base value,
divide the base value by the number of resource limitation steps (10) to calculate the step width, and
provide a resource vector comprising for the respective resource the test steps, wherein the base value is the middle value of said vector and the difference between to neighbouring steps is defined by the calculated step width,
wherein the availability of a resource is a measure of the available amount of the respective resource, and the applications share refers to the relative amount of said resource consumed by the respective application (3-1 - 3-n) during the simulated run, and the applications utilization refers to the total amount of said resource consumed by the respective application (3-1 - 3-n) during the simulated run.

13. Apparatus (1-1, 1-2) according to any one of the previous claims 11 and 12, wherein the resource determiner (6-1, 6-2) is configured to:
prioritise the resources and successively limit the resources starting with the resource of the highest priority,
determine for every resource limitation step (10), if the respective application (3-1 - 3-n) runs within the predetermined performance level (11), and
select for the respective resource as a viable minimum resource value for the respective application (3-1 - 3-n) the resource value of the last limitation step, if the respective application (3-1 - 3-n) does not run within the predetermined performance level (11) with the actual resource limitation step (10),
especially wherein the resource determiner (6-1, 6-2) is configured to determine the viable minimum resource value for all resources but the resource with the lowest priority, and wherein a resource cost function for every application (3-1 - 3-n) is provided which provides a performance value for the respective application (3-1 - 3-n) and wherein the resource with the lowest priority is a parameter of the resource cost function, and/or
wherein the resource determiner (6-1, 6-2) is configured to define the priorities of the resources based on the importance of the respective resources to the respective application (3-1 - 3-n), or wherein the priorities of the resources are defined based on the applications (3-1 - 3-n) share of the respective resource.

14. Apparatus (1-1, 1-2) according to any one of the previous claims 11 and 12, wherein the resource determiner (6-1, 6-2) is configured to:
determine for every permutation of amounts of resources based on the resource limitation steps (10), if for the respective permutation the respective application (3-1 - 3-n) runs within the predetermined performance level (11),
especially wherein the resource determiner (6-1, 6-2) is configured to define a resource cost function which provides a performance value for the respective application (3-1 - 3-n) and wherein all resources utilized by the application (3-1 - 3-n) are parameters of the resource cost function.

15. Apparatus (1-1, 1-2) according to any one of the previous claims 11 to 14, further comprising a resource allocator configured to optimize for a combination of all applications (3-1 - 3-n) in a computer system (2) an optimal resource allocation based on the determined minimum resource amounts, and/or automatically allocate for every application (3-1 - 3-n) and for every resource the determined minimum resource amount in a computer system (2), and/or automatically generate a software image for a computer system (2) comprising an operating system and the applications (3-1 - 3-n), wherein the operating system is automatically configured to allocate for every application (3-1 - 3-n) and for every resource the respective amount of the resource in the computer system and/or automatically allocate for every application (3-1 - 3-n) and for every resource the determined minimum resource amount in a computer system (2).
